# EUROPEAN PATENT SPECIFICATION

(11) **EP 1 737 768 B1**
(45) Date of publication and mention of the grant of the patent: **26.05.2010**
(21) Application number: 05718700.7
(22) Date of filing: 12.04.2005
(51) Int. Cl.: B65G 37/02, B65G 1/04, B65G 43/10

(54) **DISTRIBUTION AND TEMPORARY STORAGE SYSTEM OF TRANSPORT UNITS**
VERTEILUNGS- UND ZWISCHENLAGERUNGSSYSTEM FÜR TRANSPORTEINHEITEN
SYSTEME DE DISTRIBUTION ET DE RANGEMENT TEMPORAIRE D'UNITES DE TRANSPORT

(30) Priority: 22.04.2004 PT 10311104
(43) Date of publication of application: 03.01.2007
(73) Proprietor: Inesc Porto - Instituto de Engenharia de Sistemas e Computadores do Porto, P-4200-465 Porto (PT)
(72) Inventor: MOREIRA GUARDÃO, Luís Miguel, P-4510-506 Fanzeres - Gondomar (PT); DA COSTA GAMA LIMA REBELO, Rui, Diogo, P-4705-089 Braga (PT); ROCHA E SILVA SÁ MARQUES, Paulo, Jorge, P-4415-806 Sandim - Vila Nova de Gaia (PT); GUEDES, Fernando, Augusto, P-4710 Braga (PT); CALDEIRA PINTO DE SOUSA, José, Carlos, P-4465-748 Leça do Balio, Matosinhos (PT)
(74) Representative: Ferreira, Maria Silvina
(86) International application number: PCT/IB2005/051194
(87) International publication number: WO 2005/102879

(56) References cited:
- EP-A- 1 375 389
- US-A- 5 937 994

## Description

### Invention Field

The present invention relates to the domain of automatic systems for handling and storage in support to the work in a factory. More precicely to a distribution and temporary storage system of transport units formed by a matrix conveyor as stated in the preamble of claim 1 and disclosed by EP 1 375 389 A.

### Invention Background and Prior art

In the 80s and 90s, the industry in general and some sectors in particular, namely those related to fashion or consumer products, were subject to profound changes in the requirements of the market. The decrease in the average dimension of orders and respective delivery times, the increase of diversity of models and respective variants, the emergence of products configurable by the customer and the increase of the demand for quality are factors that have led companies to radically change their products and respective associated processes, namely marketing and sales, distribution and production.

Within the scope of the production process, one of the areas that has undergone the largest impact was internal logistics, i.e., warehousing, transportation and distribution of materials and components in the factory plant, from the raw material warehouses to those of finished products. The factors formerly referred to have induced an exponential increase of the number of lots to be handled, and therefore of the efforts and complexity of its management.

To respond to this challenge several logistic systems have been developed, with different levels of automation, whether for the inter-departmental logistics (between different sections), whether for the interior of the sections themselves, namely for production lines.

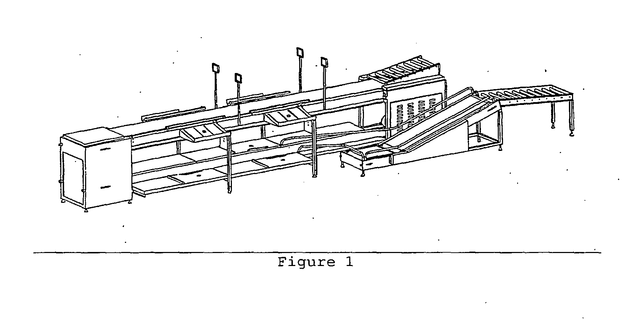

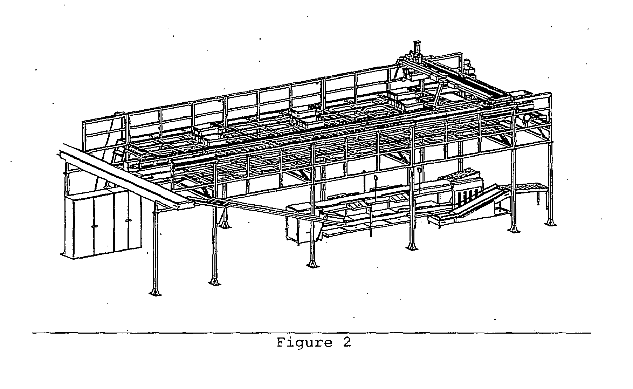

Focusing now on the systems for production lines, there are available on the market, transportation systems by suspension or by mat conveyor, partially or totally automated, with possibility of coupling manual or automatic storage systems and with more generic or more specific applications for certain types of industries and/or departments. As an example, reference is made to the conveyors for stitching lines of foot-wear companies, in its computerised (figure 1) and automatic versions with dynamic overhead storage (figure 2) of the Portuguese company LIREL, and the systems patented by Anzani PT 073,918 and US 6, 357,985, formed by distribution conveyor systems and feeding mechanisms to the work stations and temporary warehousing making use of gates and of the effect of gravity. More recently other systems were patented representing improvements or adaptations of the ANZANI's system, namely US 6,704,613 and US 6,669,003. In alternative to the existing systems of mat conveyors, there are systems based on roller corridors and belts that allow the transmission of movement between them thus minimising the quantity of motor drives. In these systems the transfer of the transport units/boxes from the transport corridor to other adjacent ones or to the work stations/destination is done through the herewith indentified as transference cells (transfer apparatus in US patents). Patent US 5,082,109 of Societe Interroll refers to this mechanism which is later improved US 6,581,749 and US 6,662,929 and used in different systems US 6,471,045 and US 6,230,872, the latter of UNITED PARCEL, uses the principle of transference cells to implement a stationary switching matrix over a set of movement channels, based on rollers and belts, so as to distribute packages with orders coming from only one source to a number of destinations.

LIREL's and Anzani's systems are based on the concept of distribution of work directly to the stations, avoiding the manual handling of production lots and also of machines, thus reducing the time of preparation of production lines every time the production of a different model is started. These distribution systems respond to the needs of the companies whose productive processes are characterised by production orders or lots of medium dimension and by a large diversity of models, maximising the productivity levels of the respective production lines.

Also, the system disclosed in the document EP1375389A (Asahi-Seiki Manufacturing CO., Ltd; Lemcos Inc) describes a device matrix that allows the steering of an item from an association position to a specific end. This specific matrix deals with one item at the time, according to what is expressly indicated on claim 1 of said document, while the present invention allows one to deal with multiple items simultaneously. On the system described in the said document, the association position's movement to the end is effected along a predefined path, continuously, while on the present invention the mentioned path is divided in sections which therefore can be interrupted to execute partially or completely the movement of another item.

With the passing of the 90s, the standards of consumption changed even further, increasing models diversity and the number of very small quantities orders, reaching, in some cases, to the extreme situation of special products, where each order corresponds to a specific product for a specific customer. This reality has an immediate consequence in the decrease of production lots, imposing, in some cases, the creation of unitary lots.

The current transport and distribution systems have proven unable to respond to this new reality, since the number of lots increases significantly and, furthermore, the working time of each lot decreases in the same proportion. These systems have the particularity of working like a roundabout or in circle, forcing the containers to return to the beginning of the conveyor system before being sent to the next work station or to make a complete turn around of the transport line. This way of operation prevents the current systems from effectively responding to the new production requirements, since they are not able to feed the work stations with the necessary cadency.

Further to what has already been referred, the coupling of storage systems, whether vertically or horizontally, constitutes a worsening of the routes done by the containers, since round trips to the warehouses are added. In the case of systems with warehouse, it becomes necessary to increase the stock per operation, so as to compensate the time spent in the moving of containers between the warehouse and the work stations.

New movement systems should have as one of their main objectives the reduction of containers movement time, either between work stations, or between the warehouse and the work stations. It has, therefore, become desirable the design of a new distribution and temporary storage system of transport units which will solve the problems indicated, namely through mechanisms of fast transfer of units between any work stations and between these and possible temporary storage systems, thus creating benefits and competitive advantages in relation to the existing systems.

### Brief Description of the Invention

The object of this invention is a distribution and temporary storage system of transport units (SIDAT) as stated in the appended claim 1, especially created to handle, in production lines with great speed and flexibility requirements, product lots, materials or components of work in progress. Examples of this type of lines are the production lines of companies related to fashion (clothing and foot-wear) and production lines of special products (namely assembly), for sectors such as furniture, metal-mechanics or electronics.

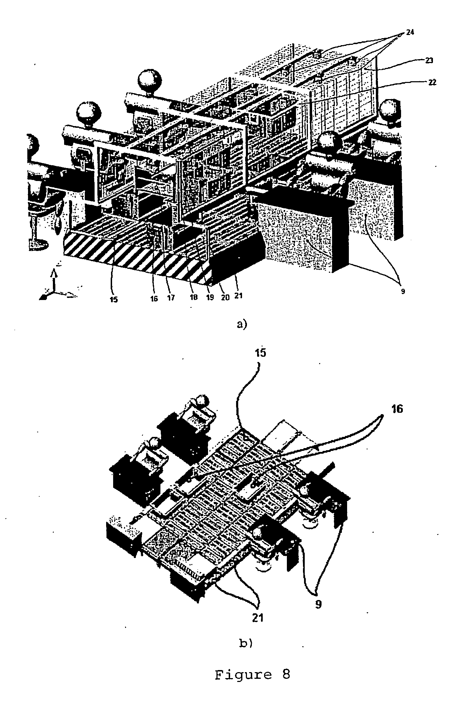

SIDAT, generally illustrated in figure 8a, is formed by an aggregated set of individual movement cells (CMi), arranged in form of a matrix, designated by matrix conveyor, and by an overhead storage system (SAT), which optionally may be associated to the conveyor. The CMis are motorised through the coupling to a centralised movement bus and have the ability of moving a transport unit known as container in any direction, to the adjacent CMis.

The compound movement cells (CMc) are constituted by the ranked aggregation of individual movement cells, associated univocally to one work station, with the function of feeding, warehousing and flowing the work carried out therein, complying with a set of requirements listed below.

The transfer movement cells (CMt) are CMi exclusively dedicated to the transfer operations of transport units between the CMcs, not being part of these and therefore not being associated to any work station.

The matrix conveyor may assume several configurations, according to the number of CMis that compose the CMcs and the number of CMts, as it will be described below.

The transport units together with the materials to be worked in the stations are placed on the conveyor from an entry and association position, where an association is formed between the container (univocally identified by a number and by a barcode or electronic tag, depending on the concrete applications and on the respective work conditions) and the information of the lot in question (namely the model, number of units and the respective operating routings). The work stations by which the transport unit will have to pass are defined in function of the operating routings and of the operations to be carried out in each station (depending on the machines and/or the associated operators). A finer attribution will be accomplished by a scheduling algorithm of SIDAT which, in every moment, will deal with the availability of resources and will try to optimise a set of criteria, namely the minimisation of the waiting time for work, the routes and movements to be carried out and the changes to the posts configuration.

The movement of the transport unit from the position of association towards the work station may be carried out through the passage from CMi to CMi or by making use of the manipulator associated to the SAT (if any).

The movement of the transport units through the transport system is done by directing them to the point of entrance of CMcs (that is, of the work stations). Once there, the system uses the CMis (whose number depends on the specific configuration) to store transport units at the entrance, make them available to the operator and store them at the exit. All the movements of the transport units are automatically carried out by the system. The work stations operators dispose of a button to mark the end of the execution of operations in the transport unit that will be at the point of work, thereby notifying the system that it can send it to the next station and make the next transport unit available to the operator. The end of the operation may also be automatically marked, through a digital imput (which can be driven, for instance, by the control system of a machine that is placed in the station).

In case there is no free destination station where to send a transport unit that is leaving a work station, it can be placed in the SAT (if any) until the situation is changed, SAT working as a temporary buffer, in addition to the storage capacity already existing at the work stations, through the CMis designated by 'Ex - waiting _x_', in one of the multiple possible configurations of which two will be seen below, in detail. Afterwards, the transport unit will be removed from the warehouse and sent to the work station to which it has been attributed to.

This procedure is carried out until all the routing operations have been carried out. The exit of the transport unit from SIDAT, usually after the accomplishment of all operations, is carried out through a position of exit and dissociation (becoming the unit free to be used again).

In relation to the patent of United Parcel US 6,230,872, which implements a packages selection system, in which a stationary cells matrix of roller conveyors and multi-directional belts directs packages to a plurality of destinations, the proposal of the present invention is distinct: the entire system is based on the so-called individual movement cells, whose movement is transmitted thereto from a centralised movement bus, constituting these the basic and obligatory unit for the construction of more elaborated movement, temporary storage and transfer systems, named in a general way as matrix conveyor; the proposed system in this invention allows dealing with multiple sources and multiple destinations for the transport units allowing, under the control and supervision of a management program, to simultaneously handle multiple transport units following their predefined operating routings. The logic aggregation of two or more movement cells constitute the so-called compound movement cells, associated to the work stations, which possess, other than the basic movement attributes, functions of temporary storage. For the reasons presented above the components of the system proposed in the present invention are innovative and so is the system as a whole, adjusting itself to a range of applications much wider than the currently existing systems.

### Brief Description of the Figures

The functional and constructive features of SIDAT are better understood through the detailed presentation and explanation of the attached drawings. The represented configurations are given exclusively as way of example and do not intend to be restrictive regarding other possible configurations using the concepts and components described in this patent.

Figure **1** shows, as an example of the prior technique, a conveyor for stitching lines of foot-wear companies, in its computerised version.

Figure **2** shows, as an example of the prior art, a conveyor for stitching lines of foot-wear companies, in its automatic version with dynamic overhead storage.

Figure **3** shows a CMi under the forms of diagram (**a**) and 3D view (**b**). The transport unit movement mechanisms are pictured in the two directions and four possible orientations.

Figure **4** shows a CMc created from the ranked aggregation of four CMis. In this configuration there is one waiting position (E1) (**6**), one entrance and waiting position (E2) (**5**), one work position (T) (**7**) and one post-work storage position (AT) (**8**). The straight arrows represent the possible orientations and directions of transport units circulation, while the curved arrow represents the direction of movement of the transport unit inside the CMc.

Figure 5 shows a CMc created from the ranked aggregation of two CMis. In this case, there is only one entrance and waiting position (E1) (**6**) and one work position (T) (7).

Figure **6** shows the centralised movement bus that provides the means to transmit movement to the CMis mounted thereon.

Figure **7** shows the coupling mechanism of the CMis to the centralised movement bus.

Figure **8** shows a general view of the system and its versions **a**) with the matrix conveyor only and **b**) in which the matrix conveyor is complemented with an Overhead Storage System and a three-axis associated manipulator.

Figure **9** shows a SIDAT configuration formed by a matrix conveyor resulting from the ranked aggregation of CMc and by a SAT.

Figure **10** shows a SIDAT configuration formed by a conveyor resulting from the ranked aggregation of CMcs and by two CMis central corridors with the function of moving the transport units between work stations.

### Detailed Description

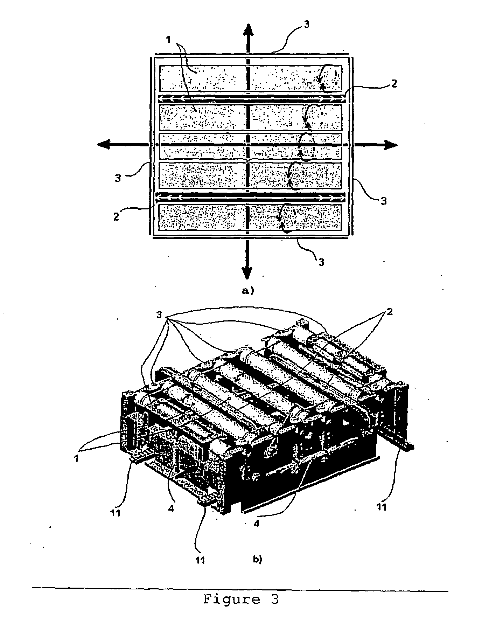

Referring to figure **3** (**a and b**) a CMi is formed by: a set of rollers (**1**) which, when in rotation, enable the movement of a transport unit in the rotation direction, depending the movement direction on the rotation direction; by a system of distribution belts **(2)** assembled over a platform which enables its elevation above the the roller system level (**1**) enabling, when in motion and in the upper position of the elevating platform, to move a transport unit in a direction perpendicular to that of the rollers and in the direction of the respective rotation. Depending on the movement to be carried out, the side guides/bumpers (**3**) will be raised by means of pneumatic cylinders and associated mechanisms (**4**) so as to ensure a straight and guided displacement of the transport unit and eventually its stop in the intended location. The CMi is assembled over a power driven chains/belts bus (**11**) to which it establishes coupling through a system described below, thus allowing the CMis rollers or chains system movement.

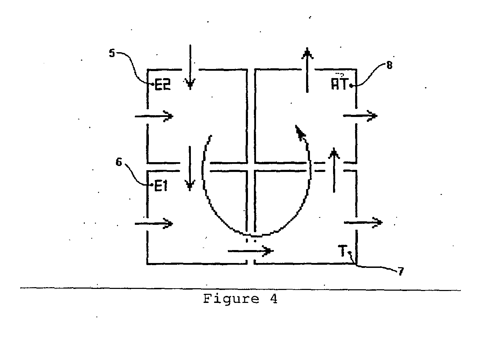

Referring to figure **4****,** a CMc is formed by the ranked aggregation of four CMis. The four CMis will have distinct designations according to the functions that are associated thereto:

| | |
|---|---|
| **E2 - waiting 2 -** (**5**) | cell that receives the transport unit coming from another CMc or from the SAT's manipulator, being the next step its placement at E1. This cell works as a second storage buffer for the work station. |
| **E1 - waiting 1 -** (**6**) | cell that works as a buffer for the work cell T1, receiving the transport units from E2. |
| **T - work -** (**7**) | cell where the contents of the transport unit are accessed by the worker so as to execute the operation which has been defined for the work station associated to the CMc. |
| **AT - post work -** (**8**) | cell where the transport unit is displaced to, immediately after completion of work at T. In the event of the worker finalising work at T and the transport unit may not im-mediately proceed to AT, the worker may access the transport unit at E1 and start the respective operation. |

The movement of transport units between E2 and T is carried out in an automatic way by the system. The movement from T to AT is carried out after the completion of work at T, which takes place only when the worker signals such event, using an existing pushbutton at the work station for this purpose.

Once at AT, the transport unit will proceed to a CMi E2 associated to the work station at which the next operation of the operating routing will be carried out. These movements between CMcs are managed by SIDAT's scheduling and management algorithm which, depending on various criteria, will decide when, how and where to move the transport unit.

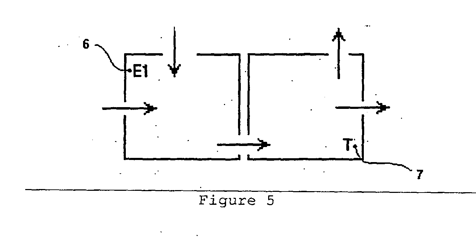

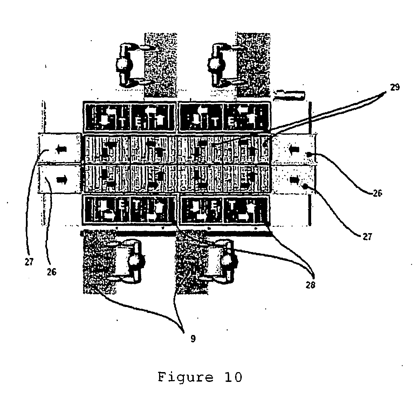

Referring to figure **5**, a simplified compound movement cell is presented, in relation to that of figure **4**, designated below as CMcs, which is formed by the ranked aggregation of two CMis, E1 and T (**6**, **7**). The transport units movement from E1 to T is automatically carried out by the system. The movement from T to a neighbouring CMi is carried out after the completion of work in T and complying with other conditions described below in the detailed description of the configuration of the matrix conveyor illustrated in figure 10.

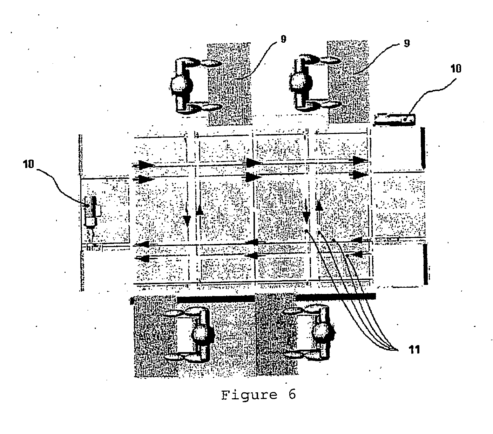

Referring to figure **6**, the CMis are power driven by means of mechanical coupling to a movement bus formed by a distribution belts/chains system (**11**) connected to a set of motors (**10**), arranged in form of matrix so as to be able to transmit movement to all conveyor's CMis, assembled thereon. Depending on the belt to which the coupling is done, the movement of the transport unit is obtained, in the desired direction and orientation.

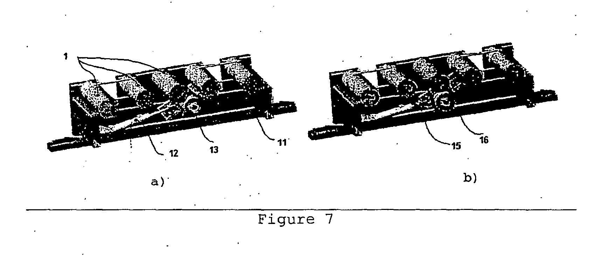

Referring to figure **7**, the movement transmission mechanism to the rollers (**1**) and CMis belts through the centralised movement bus is carried out by means of a pneumatic actuator (**12**), a coupling system (**13**) and a chain or notched belt (**11**). In figure **7a**), with the pneumatic actuator distended, the coupling system does not make contact with the belt/chain and the rollers/belts are stopped. At a second moment, figure **7b**), with the retraction (**15**) of the pneumatic actuator, the coupling system establishes contact (**16**) with the belt/chain thereby transmitting movement to Cmi's rollers or belts system.

Referring to figure **8a**, an overhead movement and storage system (SAT) of transport units will serve as a temporary buffer between work stations for the transport units. The SAT is constituted by a set of overhead storage cells (CAT) (22), organised in form of a matrix, in which a transport unit may be placed or removed by the associated manipulator **(17).** The latter will allow the movement of transport units **(16)** between CMis **(15)** and between these and the CATs. When stored in the CATs the transport units will stay placed over the conveyor at a higher level, i.e. in the "overhead" (hence its designation), obviously observing safety standards through the placement of a protection structure **(23).**

There are three working levels for the manipulator: a first one at the work stations level **(20),** a second one, further above, where the manipulator moves the transport units between CMis **(18)** and, lastly, a storage level **(19).** Below the work level there is a zone reserved to the centralised movement bus **(21).**

The retention mechanism **(24)** of the transport unit in the CAT is purely mechanic, characterised by that it operates with mechanics binary logic, being that in a first drive it holds the transport unit and in the next drive it releases the transport unit, and its design is modular, similar to the CMis. Therefore, if a CAT gets damaged, it will be marked as unavailable in the management system, and its maintenance will be carried out without the need for the SIDAT system to be shut down. In figure **8** the SAT is illustrated with the manipulator and the CATs, with its details not constituting restrictions as to its possible distinct practical implementations.

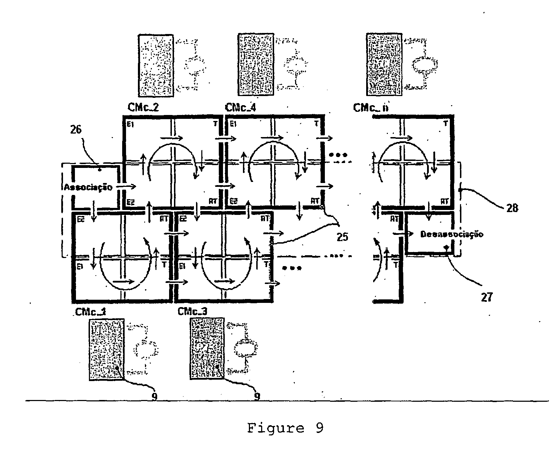

Referring to figures **8a** and **9****,** a possible configuration of SIDAT is formed by the ranked aggregation of CMcs **(25),** a possible configuration of SIDAT is formed by the arranged according to the figure, and by a SAT. The SAT is set up over the central channels of the conveyor **(28)** formed by the CMis E2 and AT.

The transport units are placed in the conveyor from an association position **(26).** The work stations **(9)** through which they will have to pass are defined by the system, in function of its respective operating routings and of the station able to perform these operations; a finer attribution will be accomplished by a management and scheduling algorithm of SIDAT which, in every moment, will deal with resources availability and will try to optimise a set of criteria, namely the minimisation of time waiting for work, the minimisation of blockages in the CMcs, i.e., when a transport unit finishes the work and is unable to be immediately sent to another cell, etc.

The movement of the transport unit from the association position **(26)** towards the CMc **(25)** associated to a work station **(9)** may be carried out through the passages of the adjacent CMcs, in front or at its right, or else making use of the manipulator associated to the overhead storage system, in the cases in which the CMc associated to the next indicated work station in the operating routing is another one.

After arrival to the cell E2, the transport unit will proceed automatically to E1 and from there to T everytime that they are available, i.e., without a transport unit. Once the transport unit is placed at cell T, the worker will take the materials out of the transport unit and will carry out the operation(s) intended to be carried out at his or her work station. After completion of the work programmed for this work station, the operator will signal the system through a pushbutton and the transport unit will automatically proceed to the cell AT, in case it is free, or directly to cell E1 of the neighbouring CMc, in case this is the next work station of the transport unit and the respective cell E1 is free. After the placement of the transport unit in AT, in case there is no immediate availability of the necessary resources, namely a free destination station or SAT manipulator is carrying out other movements, the transport unit may, at first instance, wait until the situation changes, since, in the worse case, work has just started at this point in the next transport unit. The execution time of the transport unit operation at T corresponds to the time interval the transport unit in AT has to proceed to the next work station or to the SAT without causing a blockage in the exit from T to AT. The possibilityis added to extend the acceptable permanence period of a transport unit at AT, since the worker at the work station will be able, in this configuration, to access the transport unit contents at E1, thus being able to continue the work without interruptions. SIDAT's management and scheduling algorithm will deal, in every moment, with the need of optimising the resources so as to avoid these blockage situations and, simultaneously, try to optimise the work station occupation , ideally at 100%.

SAT works as a temporary buffer, in addition to the buffers already implemented in this configuration with the CMis 'E1 - waiting 1', 'E2 - waiting 2' and 'AT - Post Work', constituent parts of the CMc. The manipulator associated to SAT will carry out all movements from CMc to CMc that occurs in non-adjacent cells and additionally those movements that force making a course contrary to the normal working flow in this configuration. In case a transport unit is at AT and there are no available station(cell E2 free) able to carry out the next programmed operation of the operating routing, the transport unit can proceed to SAT, to a free CAT that is preferably near the next work station and associated CMc; The situations of inadequate flow balancing are compensated through an increased storage capacity at the work stations complemented by the SAT.

In this configuration, the CMcs have autonomy to carry out the movements from E2 to AT, becoming possible that a very large number of movements from CMi to CMi may occur simultaneously in the core of CMcs. Likewise, several translation movements of transport units may occur simultaneously between adjacent CMCs.

The exit of the transport unit from SIDAT, normally after carrying out the totality of the operations, is accomplished through a dissociation position (27).

Referring to figure **10****,** an alternative configuration for SIDAT will be formed by the ranked aggregation of CMcs **(28),** arranged according to the figure, and by a set of CMts **(29),** disposed in form of central corridors, with the function of moving transport units between CMcs. In this configuration the association of a SAT is optional.

A transport unit containing a production lot to be processed at the work stations served by the matrix conveyor is associated to the SIDAT through an association position, existing two such positions in this configuration, proceeding afterwards to the CMc associated to the work station where the next programmed operation will be performed. The movement of the transport unit is carried out through the passage between CMts, which form the central corridors of the matrix conveyor, towards cell E1, which must obligatorily be free.

After the arrival to cell E1 the transport unit will automatically proceed to T everytime it is available, i.e., without a transport unit. Once the transport unit is placed at cell T, the worker will remove the materials from the transport unit and will execute the operation(s) programmed to be carried out in his or her work station. After completion of work, the operator will signal to the system through a pushbutton or alternatively the SIDAT management will issue that order in the end of the time period p rogrammed for the operation in question. The transport unit will proceed afterwards to cell E1 of the next work station through one of two possible ways: 1- if the next programmed work station is the adjacent one and cell E1 is free the transport unit will pass directly. 2- through the CMts cells, as soon as the route designed over the CMts and decided by SIDAT's scheduling algorithm, is partially or totally free.

After the signalling of the end of operation, the transport unit may, due to unavailability of a CMt route, or alternatively due to a manipulator associated to SAT being busy (if any), stay at cell T. Such situation is possible since the worker at the work station will, in this configuration, be able to access the contents of the transport unit at E1, thus being able to continue the work without interruptions. SIDAT's management and scheduling algorithm will deal, in every moment, with the need of optimising the resources so as to avoid these blockage situations managing the CMts functioning, through the partial allocation of resources and the possibility of multiple movements with distinct extensions and orientations and, simultaneously, trying to optimise the work station occupation, ideally at 100%.

The CMcs have a buffering capacity inferior to that of CMcs having only one waiting position; this configuration has nevertheless the advantage of being able to send transport units to previous work stations, i.e., in the opposite direction to the normal flow of the operating routing, thus being able to function without SAT and the associated manipulator.

Besides the preferential configurations presented in figures 8, 9 and 10 there are, however, a set of others whose usage may occur in a short period of time and whose structure is briefly described, since its functioning principle is identical to the two preferential configurations above described in detail:
- Two CMcs lines placed side by side so as to function as a circular movement structure.
- Two CMcs lines with a CMt central channel instead of the two existing ones in the preferential configuration of figure 10.
- Two CMcs lines with two CMt central channels, so as to avoid the obligatory presence of an overhead storage system in the preferential configuration of figures 8 and 9.
- Two CMcs lines with 3 CMt central channels, so as to increase the cadency of the configuration presented in the previous paragraph.

SIDAT's management system based on a PC and/or a programmable logic c ontroller is based on an information organisation model for which it is defined, firstly, the operating routing structure, necessary to produce a certain article and, after that, which resources and information are necessary to the correct execution of those operations. The system is composed of several modules, listed below, in order to be able to work isolated or integrated with ERPs or other enterprise management systems:
- A configuration module of engineering information associated to products, resources and information necessary to the operations execution (machines, people, tools, raw material, operating routings, etc).
- A preparation module of the manufacturing orders and other associated information lots.
- A configuration module of the matrix conveyor and of the Overhead Storage System.
- A control module of the matrix conveyor and of the SAT associated manipulator.
- A work scheduling module in SIDAT, associated to a multi-criteria op timisation algorithm, for the determination of the movements to be carried out at every moment.
- A monitoring and historic information module.
- Interfaces of integration with ERP systems or other management systems.

## Claims

1. A distribution and temporary storage system of transport units (SIDAT) formed by a matrix conveyor, **characterised in that** it is a ranked aggregation of individual movement cells (CMi), formed by a set of parallel rollers (1), by two belts (2) located in the gap between the rollers (1) and arranged parallel thereto, set up over an elevating system which will position them below or above the rollers level, whether it is intended to move the transport unit placed on the cell perpendicular to the rollers (1) or in the parallel direction; by a set of four bumpers/guides (3) which can be operated individually, working as a guarantee of the correct route of a transport unit or of its stop, when its destination is the current movement cell, and by an electro-pneumatic system (13) which will make the coupling to an external motorised belts system (11) which allow the rollers (1) and belts (2) movement mentioned above in the four possible orientations, disposed in the form of matrix, and motorised from a centralised movement bus (11) and set up thereon, capable of moving the transport units placed upon themselves to any one of its neighbouring cells in the matrix, being the system optionally supplemented with an overhead storage system of transport units formed by a set of overhead storage cells (22), with a mechanic retention device of the transport units of the type *"press and hold - press and release*", arranged in form of matrix over the individual movement cells at a higher level and by a three-axis manipulator that carries out the transfer of transport units (16) between the individual movement cells (17) and between those and the overhead storage system.

2. The distribution and temporary storage system of transport units, according to claim 1, **characterised in that** it comprises work stations (9) for programmed operations according to a programmed sequence and **in that** it possesses association points (26), which constitute locations where a material lot is associated to a transport unit so that this set is recognised and treated by the system until the moment in which all the programmed operations to be carried out in the work stations (9) are completed or, alternatively, there is a request to interrupt the programmed sequence; in this case, the transport unit will be able to proceed to a disassociation point where the inverse operation will take place.

3. The distribution and temporary storage system of transport units, according to claim 1, **characterised in that** the Centralised Movement Bus (11) being formed by a motor (10) and by a set of belts (2) or chains arranged in form of a matrix and that moves in orthogonal directions and in the four possible orientations.

4. The distribution and temporary storage system of transport units, according to claims 1 and 3, **characterised in that** the Centralised Movement Bus (11) allowing the motorization of any individual movement cell when the same is set up over one of the elements of the movement matrix and a respective electro-pneumatic system (12) is set in motion, making the coupling (13) to one of the motorised belts (2), thereby transmitting movement to the rollers (1) or belts (2) of the movement cells.

5. The distribution and temporary storage system of transport units, according to claim 1, **characterised in that** Compound Movement Cells (CMc) being formed by the ranked aggregation of four individual movement cells associated to a work station (9), in which each one of the individual cells has a distinct function:
E2 - waiting 2 (5) - cell in which is placed a transport unit whose contents have an operation programmed to be carried out in the work station (9);
E1 - waiting 1 (6) - cell where the transport unit coming from E2 (5) - waiting 2 is displaced to when E1 (6) is free;
T - work (7) - cell where the transport unit is displaced to when T is free and where the operator of the work station (9) accesses the contents in order to carry out programmed operations;
AT - post work (8) - cell where the transport unit is displaced to coming from T (7) when operations programmed to be carried out therein are already completed and AT (8) is free.

6. The distribution and temporary storage system of transport units, according to claims 1 and 5, **characterised in that** the movements in the Compound Movement Cells from E2 (5) to E1 (6), from E1 (6) to T (7) and from T (7) to AT (8) being automatically carried out by the control system when the necessary conditions occur, namely the destination cell being free and, in the case of T (7) to AT (8), having finished the operations programmed to be carried out in the work station (9), being that in this latter case, the condition is fulfilled when the worker presses a pushbutton or, optionally, the control system gives the order as soon as the programmed time to carry out the operations in the work station (9) has been reached.

7. The distribution and temporary storage system of transport units, according to claims 1 and 5, **characterised in that** in the Compound Movement Cells the worker is able to access the contents of the transport unit placed in E1 (5) to carry out the programmed operations, when the contents work of transport unit placed in T (7) is completed and it cannot proceed to AT (8), since it is occupied, being possible thereby to postpone the blockage situation of the work station (9) while the transport unit placed in AT (8) is not removed.

8. The distribution and temporary storage system of transport units, according to claim 1, **characterised in that** the simplified Compound Movement Cells being formed by a ranked aggregation of two individual movement cells associated to a work station (9), having each of the individual cells a distinct function:
E1 - waiting 1 (6) - cell where a transport unit is placed and whose contents have an operation programmed to be carried out in the work station,
T - work (7) - cell where the transport unit is displaced to when T (7) is free and where the operator of the work station (9) accesses the contents in order to carry out operations programmed to be carried out therein.

9. The distribution and temporary storage system of transport units, according to claims 1 and 8 **characterised by** the fact that in the simplified Compound Movement Cells the movements from E1 to T are automatically carried out by a control system when the necessary conditions occur, namely the destination cell being free, the worker signalling the managing system of the distribution and temporary storage system of transport units when the programmed work is completed in the contents of the transport unit, or, alternatively, the system being able to consider the work completed at the end of a period of time programmed for the operations to be executed; in any case the system will remove the box from cell T to the adjacent Movement Cell in order to start the route to the compound movement cell (CMc) associated to the work stations (9) where the next operation(s) will be carried out.

10. The distribution and temporary storage system of transport units, according to claim 1 and 8 **characterised by** the fact that in the simplified Compound Movement Cells the worker is able to access the contents of the transport unit placed in E to carry out the programmed operations, when the work of the transport unit placed in T (7) is completed and it cannot proceed to its next destination; it is possible thereby to postpone the blockage situation of the work station (9) while the transport unit placed in T (7) is not removed.

11. The distribution and temporary storage system of transport units, according to claims 1, 3, 5 and 8 **characterised by** the matrix conveyor being formed by any combination of movement cells, compounded and individuals, associated to a centralised movement bus (11), in one or more versions of the system; (i) with the matrix conveyor only and in which the matrix conveyor is complemented with an Overhead Storage System (22) and a three-axis associated manipulator (17); (ii) with a distribution and temporary storage system of transport units (SIDAT) configuration formed by a matrix conveyor resulting from the ranked aggregation of Compound Movement Cells (CMc) (25) and by an overhead storage system (SAT); (iii) with a distribution and temporary storage system of transport units (SIDAT) configuration formed by a conveyor resulting from the ranked aggregation of Compound Movement Cells (CMc) (28) and by two individual movement cells central corridors (29) with the function of moving the transport units between work stations (9).

12. The distribution and temporary storage system of transport units, according to claim 1, **characterised by** the overhead storage cell (22) is formed by a rectangular structure with a mechanic retention device of the type *"press and hold - press and release",* which allows to hold a transport unit when the same is elevated from an inferior level.

13. The distribution and temporary storage system of transport units, according to claims 1 and 12, **characterised by** the storage cell transport unit retention system (24) operates with mechanics binary logic, being that in a first drive it holds the transport unit and in the next drive it releases the transport unit.

14. The distribution and temporary storage system of transport units, according to claims 1, 12 and 13 **characterised by** the Overhead Storage System being formed by an aggregated set of overhead storage cells (22), arranged in a matrix over the matrix conveyor, and by a three-axis manipulator (17) which allows the transfer of transport units (16) between the matrix conveyor cells and between those and the overhead storage cells.

15. The distribution and temporary storage system of transport units, according to claim 1, **characterised by** the fact that it has a programme associated, based on a computer and/or a programmable logic controller responsible for managing, monitoring, scheduling and balancing the system, taking into consideration the information of work to be carried out in the contents of each transport unit, namely in the operating routing, times, quantities and identification of article, being this information obtained in an association operation of the transport unit to its contents.

16. The distribution and temporary storage system of transport units, according to claims 2 and 15, **characterised by** the management programme performing a dynamic management of the system in a multi-criteria approach, choosing at every moment which movements of the transport units to execute between movement cells or from these to the overhead storage system and vice-versa, taking into consideration the resources and the necessities, in order to guarantee, amongst others, null waiting times in the work stations, compliance of defined deadlines and absence of blockage in the work station.

## Patentansprüche

1. Verteilungs- und Zwischenlagerungssystem für Transporteinheiten (SIDAT) , **dadurch gekennzeichnet, daß** es aus einer klassifizierten Gruppe von individuellen Bewegungszellen (CMi) besteht, gebildet aus einem Parallelwalzensatz (1) und aus zwei in der Spalte zwischen den Walzen (1) und parallel dazu eingebauten Transportbänder (2), welche über einem Hubsystem gelegt sind, die sie über bzw. unter der Walzenebene anbringt, unabhängig davon, ob das System die in der Zelle eingebrachte Transporteinheit senkrecht zu den Walzen (1) oder in eine waagerechte Richtung bewegen soll; daß es weiterhin aus einem individual bedienbaren Satz von vier Stoßfänger- und Führungen (3) besteht, welches den korrekten Weg einer Transporteinheit gewährleistet und ihrer Stillstand sichert, falls ihre Fahrziel die aktuelle Bewegungszelle ist; daß es ausserdem aus einem elektro-pneumatischen System (13), das die Kupplung zu einem externen motorisierten Fahrbändersystem (11) herstellt, und somit die Bewegung der oben angeführten Walzen (1) und Transportbänder (2) in vier verschiedenen Richtungen erlaubt, besteht, daß das System wie eine Matrix ausgelegt ist und mittels einem mittigstehenden Bewegungsbus (11) angetrieben wird und darüber gelegt ist, der fähig ist, die übereinander gelegten Transporteinheiten zu irgendeine in dem Matrix angrenzende Zelle zu bewegen, wobei das System kann ausserdem mit einem Über-Kopf-Zwischenlagerungssystem für Transporteinheiten ergänzt werden, bestehend aus einem Über-Kopf-Zwischenlagerungszellen-Satz (22) mit einer mechanischen "Drücken und halten - drücken und loslassen", der Transporteinheiten rückhaltenden, Einrichtung, wie eine Matrix über die individuellen Bewegungszellen auf eine höhere Ebene ausgelegt, und auch aus einem drei-achsigen Handlungseinrichtung, welche die Übergabe der Transporteinheiten (16) zwischen den individuellen Bewegungszellen (17), sowie zwischen diesen Zellen und dem Über-Kopf-Zwischenlagerungssystem durchführt.

2. Verteilungs- und Zwischenlagerungssystem für Transporteinheiten nach Anspruch 1, **dadurch gekennzeichnet, daß** es Arbeitsplätze (9) für programmierte Arbeiten einer programmierten Reihenfolge beinhaltet, und daß es Anbindungspunkte (26) einschliesst, welche die Stelle entsprecehn, in der ein Werkstofflos mit einer Transporteinheit verbunden wird, so daß der Satz von dem System anerkannt und behandelt wird, bis zu dem Zeitpunkt indem alle programmierten in den Arbeitsplätze (9) zu erledingen Arbeiten erledigt sind oder, anderenfalls, eine Anforderung zur Unterbrechung der programmierten Reihenfolge gesendet wird; in diesem Fall ist die Transporteinheit fähig, sich bis zu einer Trennungspunkt zu bewegen, wo die umgekehrte Arbeitsgang stattfindet.

3. Verteilungs- und Zwischenlagerungssystem für Transporteinheiten nach Anspruch 1, **dadurch** gekenntzeichnet, daß der mittigstehende Bewegungsbus (11) aus einer Maschine (10) und aus einem Bänder- (2) bzw. Ketten-Satz gebildet ist, ausgelegt wie eine Matrx, und sich in orthogonalen Richtungen und in die vier mögliche Orientierungen bewegend.

4. Verteilungs- und Zwischenlagerungssystem für Transporteinheiten nach Ansprüchen 1 und 3, **dadurch gekennzeichnet, daß** der mittigstehende Bewegungsbus (11) die Motorisierung irgendeiner individuelle Bewegungszelle erlaubt, sofern diese Zelle sich über einer der Einheiten der Hewegungsmatrix befindet, und daß ein entsprechendes elektro-pneumatisches System (12) in Bewegung gesetzt wird und die Kupplung (13) zu einer der angetriebenen Bänder (2) erstellt, und somit die Bewegung zu den Walzen (1) bzw. zu den Bändern (2) der Bewegungszellen übermittelt.

5. Verteilung- und Zwischenlagerungssystem für Transporteinheiten nach Anspruch 1, **dadurch gekennzeichnet, daß** die verbundenen Bewegungszellen (CMC) von klassifizierten Gruppen von vier individuelen Bewegungszellen, zu einem Arbeitzplatz (9) verbunden, gebildet sind, in dem jede einzelne Zelle ihre eigene Funktion hat:
E2 - warten 2 (5) - Zelle in der eine Transporteinheit ausgelenkt wird, für deren Inhalt eine programmierte Arbeit in dem Arbeitsplatz (9) zu erledigen ist;
E1 - warten 1 (6) - Zelle zu der die von der Zelle E2 (5) - warten 2 kommende Transporteinheit ausgelenkt wird, wenn die Zelle E1 (6) frei wird;
T - arbeiten (7) - Zelle zu der die Transporeinheit ausgelenkt wird, wenn die Zelle T frei ist und wo der Betreiber des Arbeitsplatzes (9) der Inhalt der Transporteinheit zugreifen kann, um die programmierte Arbeit ausführen zu können;
AT - nach der Arbeit (8) - Zelle zu der die von der Zelle T (7) kommende Transporteinheit ausgelenkt wird, wenn die darin zu ausführen progammiernten Arbeiten erledigt sind und die Zelle AT (8) frei ist.

6. Verteilungs- und Zwischenlagerungssystem für Transporteinheiten nach Ansprüchen 1 und 5, **dadurch gekennzeichnet, daß** die in den verbundenen Bewegungszellen (CMC) stattfindenden Bewegungen von E2 (5) zu E1 (6), von E1 (6) zu Zelle T (7) und von T (7) zu AT (8) automatisch von dem Steuerungssystem ausgeführt werden, sofern die notwendigen Bedingungen vorstellen, und nämlich wenn die Zielzelle frei ist und, im Falle von der Bewegung von T (7) zu AT (8), wenn die programmierten, in dem Arbeitsplatz (9) auszuführenden Arbeiten erledigt sind; in diesem letzten Fall, ist die Bedingung erfüllt, wenn der Bediener einen Druckknopf druckt, bzw. wenn der Steuerungssystem den Befehl ausgibt, nachdem die für die in dem Arbeitsplatz (9) auszuführenden programmierten Arbeit festgelegte Zeit zu Ende kommt bzw. überschritten wird.

7. Verteilungs- und Zwischenlagerungssystem für Transporteinheiten nach Ansprüchen 1 und 5, **dadurch gekennzeichnet, daß** in verbundenen Bewegungszellen der Betreiber der Inhalt der in Zelle E1 (5) stehenden Transporteinheit zugreifen kann, um die programmierten Arbeiteb zu erledigen, falls die Arbeit in dem Inhalt der Transporteinheit in T (7) fertig ist und diese Einheit nicht zur AT (8) weiter bewegt werden kann, weil diese besetzt ist, was also ermöglicht, die Blockierung des Arbeitsplatzes (9) zu verschieben, während die Transporteinheit in AT (8) noch nicht weggefahren wurde.

8. Verteilungs- und Zwischenlagerungssystem für Transporteinheiten nach Anspruch 1, **dadurch gekennzeichnet**, das die einfachen verbundenen Bewegungszellen aus klassifizierten Gruppen von zwei individuele Bewegunszellen, zu einem Arbeitzplatz (9) verbunden, gebildet sind, in denen jede einzelne Zelle ihre eigene Funktion hat:
E1 - warten 1 (6) - Zelle zu der die Transporteinheit ausgelenkt wird, für deren Inhalt eine programmierte Arbeit in dem Arbeitsplatz (9) zu erledigen ist,
T - arbeiten (7) - Zelle zu der die Transporeinheit ausgelenkt wird, wenn die Zelle T (7) frei ist und wo der Betreiber des Arbeitsplatzes (9) der Inhalt der Transporteinheit zugreifen kann, um die für diese Arbeitsplatz programmierten Arbeiten ausführen zu können.

9. Verteilungs- und Zwischenlagerungssystem für Transporteinheiten nach Ansprüchen 1 und 8, **dadurch gekennzeichnet, daß** die in den einfachen verbundenen Bewegungszellen (CMC) stattfindenden Bewegungen von E1 zu T automatisch von dem Steuerungssystem ausgeführt werden, sofern die notwendigen Bedingungen vorstellen, und nämlich wenn die Zielzelle frei ist, der Betreiber dem Steuersystem der Verteilungs- und Zwischenlagerungssystem für Transporteinheiten signalisiert, daß die programmierten in dem Inhalt der Transporteinheit auszuführenden Arbeiten erledigt sind, bzw. wenn der System selbst anerkannt, daß die o.a. Arbeiten nach Ablauf der programmierten Aufgabenzeit erledigt sind; jedenfalls nimmt der System die Kiste von der Zelle T, lenkt sie zur nächsten Bewegungszelle aus, um den Weg zu der, mit dem Arbeitzplätzen (9) verbundenen, verbundenen Bewegungszelle (CMC), wo die nächste bzw. nächsten Arbeiten stattfinden sollen, zu beginnen.

10. Verteilungs- und Zwischenlagerungssystem für Transporteinheiten nach Ansprüchen 1 und 8, **dadurch gekennzeichnet, daß** in den einfachen verbundenen Bewegungszellen der Betreiber den Inhalt der in Zelle E stehenden Transporteinheit zugreifen kann, um die programmierten Arbeiten zu erledigen, wenn die Arbeit in der Transporteinheit in T (7) fertig ist und diese Einheit nicht zur nächsten Zielzelle weiter bewegt werden kann; dies ermöglicht also eine Verschiebung der Arbeitsplatz-Blockierung (9) während der Transporteinheit in T (7) noch nicht weggefahren wurde.

11. Verteilungs- und Zwischenlagerungssystem für Transporteinheiten nach Ansprüchen 1, 3, 5 und 8, **dadurch gekennzeichnet, daß** die wie eine Matrix ausgelegte Förderanlage von irgendeine Anordnung von verbundenen oder einzelnen Bewegungszellen gebildet ist, welche mit einem mittigstehenden Bewegungsbus (11) verbunden sind, in einem oder mehreren Systemversionen; (i) nur mit der wie eine Matrix ausgelegten Förderanlage, von einem Über-Kopf-Zwischenlagerungssystem (22) und einer verbundenen drei-achsigen Handlungseinrichtung (17) ergänzt; (ii) mit einem Verteilungs- und Zwischenlagerungssystem für Transporteinheiten (SIDAT) bestehend aus einem von klassifizierten Gruppe von verbundenen Bewegungszellen (CMC) (25) zusammengesetzten, wie eine Matrix ausgelegten Förderanlage und aus einem Über-Kopf-Zwischenlagerungssystem (SAT); (iii) mit einem Verteilungs- und Zwischenlagerungssystem für Transporteinheiten (SIDAT) bestehend aus einer von klassifizierten Gruppen von verbundenen Bewegungszellen (CMC) (28) zusammengesetzten, wie eine Matrix ausgelegten Förderanlage und aus zwei mittigen Gängen (29) für einzelnen Bewegungszellen, welche dafür verantwortlich sind, die Transporteinheiten zwischen Arbeitsplätzen (9) zu bewegen.

12. Verteilungs- und Zwischenlagerungssystem für Transporteinheiten nach Anspruch 1, **dadurch gekennzeichnet, daß** die Über-Kopf-Zwischenlagerungszelle (22) eine rechteckige Struktur mit einer mechanischen "Drücken und halten - drücken und loslassen", der Transporteinheiten rückhaltend, Einrichtung ist, welche es erlaubt, eine Transporeinheit zurückzuhalten, wenn sie von einer unteren Ebene angehoben wird.

13. Verteilungs- und Zwischenlagerungssystem für Transporteinheiten nach Ansprüche 1 und 12, **dadurch gekennzeichnet, daß** das Transporteinheiten rückhaltend System (24) von einem mechanischen Binärlogik angetrieben ist, welche die Transporteinheit in einem ersten Antrieb zurückhaltet und sie in einem zweiten Antrieb loslasst.

14. Verteilungs- und Zwischenlagerungssystem für Transporteinheiten nach Ansprüche 1, 12 und 13, **dadurch gekennzeichnet, daß** das Über-Kopf-Zwischenlagerungssystem von einem wie eine Matrix über die wie eine Matrix ausgelegte Förderanlage gesetzten Satz von Über-Kopf-Zwischenlagerungszellen (22) und von einer drei-achsigen Handlungseinrichtung (17) gebildet ist, welche die Übergabe der Transporteinheiten (16) zwischen die Zellen der Matrix-Förderanlage, und zwischen diese Zellen und die Über-Kopf-Zwischenlagerungszellen durchführt.

15. Verteilungs- und Zwischenlagerungssystem für Transporteinheiten nach Anspruch 1, **dadurch gekennzeichnet, daß** das System ein Programm in einem Computer und/oder in einem programmierbaren Logikcontroller installiert ist, welches die Verwaltung, die Überwachung,die Plannung und den Systemausgleich übernimmt, unter Berücksichtigung der Informationen über die in dem Inhalt jeder Transporteinheit auszuführende Arbeit, nämlich die Arbeitswege, die Zeiten, die Mengen und die Artikelnidentifizierung, welche durch eine Verbindung der Transporteinheitsarbeit zu seine Inhalt entnommen werden.

16. Verteilungs- und Zwischenlagerungssystem für Transporteinheiten nach Ansprüche 2 und 15, **dadurch gekennzeichnet, daß** der Verwaltungsprogramm eine dynamische, mehrere Kriterien berücksichtigende Verwaltung des Systems durchführt, welche jederzeit wählt welche Transporteinheitsbewegung zwischen Bewegungszellen oder zwischen diese Zellen und das Über-Kopf-Zwischenlagerungssystem bzw. umgekehrt durchzuführen sind, unter Berücksichtigung der Ressourcen und der Bedürfnisse, um, z.B., Nullwartezeiten in den Arbeitsplätze, Fristeeinhaltung und keine Blockierung der Arbeitsplätze zu gewährleisten.

## Revendications

1. Système de distribution et de rangement temporaire d'unités de transport (SIDAT), **caractérisé en ce qu'**il s'agit d'un groupe classé de cellules de déplacement (CMi) individuelles, formé par un ensemble de rouleaux parallèles (1), par deux courroies (2) installées dans l'espace existant entre les rouleaux (1) et parallèles aux avant-mentionnés rouleaux, disposées sur un système d'élévation qui les placera au-dessous ou au-dessus du niveau des rouleaux, indépendamment du fait que les cellules doivent déplacer l'unité de transport placé sur les cellules perpendiculairement aux rouleaux (1) ou parallèlement aux mêmes; le système est encore formé para un ensemble de quatre pare-chocs/guides (3) qui peuvent être commandées séparément, assurant ainsi la trajectoire correcte d'une unité de transport ou son arrêt, dés que son arrivée soit la cellule de déplacement actuelle, et finalement formé para un système électropneumatique (13) qu'établira le couplage avec un système de courroies externe motorisé (11), permettant l'avant-mentionné mouvement des rouleaux (1) et des courroies (2) dans les quatre directions possibles; ce système se fonde sur une matrice de cellules de déplacement, motorisée par un bus de déplacement centralisé (11), sur lequel il est installé, et qui est capable de déplacer les unités de transport disposées les unes sur les autres aux cellules adjacentes de la matrice; le système peut éventuellement être complété avec un Système de Rangement Suspendu d'unités de transport, formé para un groupe de cellules de rangement suspendues (22), avec un dispositif de rétention mécanique des unités de transport du type « appuyer et maintenir - appuyer et relâcher », disposé comme une matrice sur les cellules de déplacement individuelles dans un niveau plus haut, et encore formé par un dispositif de manipulation avec trois axes, responsable pour le transfert des unités de transport (16) entre les cellules de déplacement individuelles (17) et ces cellules-là et le Système de Rangement Suspendu.

2. Système de distribution et de rangement temporaire d'unités de transport selon la revendication 1, **caractérisé en ce qu'**il comporte des postes de travail (9) pour opérations suivant une séquence programmée, et **en ce qu'**il comporte aussi des points d'association (26) qui sont des endroits où un lot de matériel est associé à une unité de transport, de telle façon que cet ensemble est reconnu et traité par le système jusqu'au moment où toutes les opérations programmées, à être accomplies dans les postes de travail (9), sont accomplies ou, autrement, une demande d'interruption de la séquence programmée est reçue; dans ce cas la, l'unité de transport pourra se déplacer jusqu'a un point de dissociation auquel l'opération inverse aura lieu.

3. Système de distribution et de rangement temporaire d'unités de transport selon la revendication 1, **caractérisé en ce que** le bus de déplacement centralise (11) est formé par un moteur (10) et par un ensemble de courroies (2) ou de chaînes, disposées comme une matrice, et que se déplace dans des directions orthogonales et dans les quatre directions possibles.

4. Système de distribution et de rangement temporaire d'unités de transport selon les revendications 1 et 3, **caractérisé en ce que** le Bus de Déplacement Centralise (11) qui permet la motorisation de n'importe quelle cellule de déplacement individuelle quand elle est installée au-dessus d'un des éléments de la matrice de déplacement, et **en ce qu'**un système électropneumatique (12) est déclenché, et établit le couplage (13) avec une des courroies motorisées (2), transmettant ainsi un mouvement aux rouleaux (1) ou aux courroies (2) des cellules de déplacement.

5. Système de distribution et de rangement temporaire d'unités de transport selon la revendication 1, **caractérisé en ce que** Cellules de Déplacement Composites (CMC), formées par le groupement classé de quatre cellules de déplacement individuelles associées a un poste de travail (9), auquel chaq'une des cellules individuelles à une fonction particulière:
E2 - attente 2 (5) - cellule dans laquelle est placée une unité de transport avec un contenu pour lequel fut programmé une opération à être accomplie dans le poste de travail (9);
E1 - attente 1 (6) - cellule dans laquelle l'unité de transport provenante de E2 (5) - attente 2 est déplacé a E1 (6) quand elle est libre; T - travail (7) - cellule dans laquelle l'unité de transport est déplacée quand T est libre et où l'opérateur du poste de travail (9) accède le contenu pour que les opérations programmées soient accomplies; AT - après travail (8) - cellule dans laquelle est déplacée l'unité de transport provenante de T (7) quand les opérations programmées pour y être accomplies sont déjà terminées et AT (8) est libre.

6. Système de distribution et de rangement temporaire d'unités de transport selon les revendications 1 et 5, **caractérisé en ce que** les mouvements dans les Cellules de Déplacement Composites de E2 (5) a E1 (6), de E1 (6) a T (7), et de T (7) a AT (8) sont automatiquement accomplies par le système de commande, une fois réunies les conditions nécessaires, notamment quand la cellule d'arrivée est libre, et, en ce qui concerne le déplacement de T (7) a AT (8), quand les opérations programmées pour le poste de travail (9) sont conclues, étant donné que, dans ce cas la, la condition est satisfaite quand l'opérateur appuye un bouton-poussoir ou, autrement, quand, le délai établi pour l'opération dans le poste de travail (9) étant dépassé, le système de commande émit un ordre.

7. Système de distribution et de rangement temporaire d'unités de transport selon les revendications 1 et 5, **caractérisé en ce que** dans les Cellules de Déplacement Composites l'operateur peut accéder au contenu de l'unité de transport placée en E1 (5) pour accomplir les opérations programmées, quand le travail dans le contenu de l'unité de transport placée dans T (7) est accompli et cette cellule ne peut pas avancer pour AT (8), une fois que cette cellule-là est occupée, ce qui rend possible d'ajourner le blocage du poste de travail (9) pendant que l'unité de transport placée dans la cellule AT (8) n'est pas enlevée.

8. Système de distribution et de rangement temporaire d'unités de transport selon la revendication 1, **caractérisé en ce que** les Cellules de Déplacement Composites sont formées par le groupement classé de deux cellules de déplacement individuelles associées a un poste de travail (9), ayant chaq'une des cellules individuelles une fonction particulière:
E1 - attente 1 (6) - cellule dans laquelle est placée une unité de transport et ayant une opération programmée pour son contenu, à être accomplie dans le poste de travail, T travail (7) - cellule dans laquelle est déplacée une unité de transport quand T (7) est libre et dans laquelle l'operateur du poste de travail (9) accède le contenu pour que les opérations programmées y soient accomplies.

9. Système de distribution et de rangement temporaire d'unités de transport selon les revendications 1 et 8, **caractérisé en ce que** dans les Cellules de Déplacement Composites les mouvements de E1 a T sont automatiquement réalisés par un système de commande dés que les conditions nécessaires soient satisfaites, notamment que la cellule d'arrivé soit libre, que l'opérateur fait signe au système de gestion du système de distribution et de rangement temporaire d'unités de transport quand le travail programmé pour le contenu de l'unité de transport est accompli, ou, autrement, que le système soit capable de considérer le travail comme étant accompli après un délai programmé pour les opération à être accomplies ; dans tout cas, le système déplacera le carton de la cellule T à la Cellule de Déplacement adjacente, a fin d'initier la trajectoire jusqu'à la Cellule de Déplacement Composite associée aux postes de travail (9) où la (es) opération(s) suivante(s) doive(nt) être accompli (es).

10. Système de distribution et de rangement temporaire d'unités de transport selon les revendications 1 et 8, **caractérisé en ce que** dans les Cellules de Déplacement Composites l'operateur peut accéder au contenu de l'unité de transport placée en E pour accomplir les opérations programmées, quand le travail dans le contenu de l'unité de transport placée dans T (7) est accompli et cette cellule ne peut pas avancer pour la suivant destination, une fois que cette cellule-là est occupée, ce qui rend possible d'ajourner le blocage du poste de travail (9) pendant que l'unité de transport placée dans T (7) n'est pas enlevée.

11. Système de distribution et de rangement temporaire d'unités de transport selon les revendications 1, 3, 5 et 8, **caractérisé en ce que** le transporteur à matrices est formé par n'importe quel ensemble de cellules de déplacement, composites et individuelles, associées à un bus de déplacement centralisé (11), dans une ou plusieures versions du système; (i) uniquement avec le transporteur à matrices, étant donné que ce transporteur à matrices est complémenté par un Système de Rangement Suspendu (22) et par un dispositif de manipulation avec trois axes (17); (ii) avec une configuration d'un système de distribution et de rangement temporaire d'unités de transport (SIDAT) formé par un transporteur à matrices, résultant du groupement classé de Cellules de Déplacement Composites (CMC) (25), et par un système de distribution et de rangement temporaire d'unités de transport (SAT); (iii) avec une configuration d'un système de distribution et de rangement temporaire d'unités de transport (SIDAT) formé par un transporteur résultant du groupement classé Cellules de Déplacement Composites (CMC) (28) et par deux couloires pour cellules de déplacement individuelles (29), responsables pour le mouvement des unités de transport entre postes de travail (9).

12. Système de distribution et de rangement temporaire d'unités de transport selon la revendication 1, **caractérisé en ce que** la cellule de rangement suspendue (22) est formée par une structure rectangulaire avec un dispositif de rétention mécanique des unités de transport du type « *appuyer et maintenir - appuyer et relâcher* », qui permet l'arrêt d'une unité de transport quand elle est élevée d'un niveau inférieur.

13. Système de distribution et de rangement temporaire d'unités de transport selon les revendications 1 et 12, **caractérisé en ce que** le système de rétention de l'unité de transport de la cellule de rangement (24) fonctionne avec un système logique binaire mécanique, étant donné que dans un premier entraînement le système retient l'unité de transport et que dans l'entraînement suivant il relâche l'unité de transport.

14. Système de distribution et de rangement temporaire d'unités de transport selon les revendications 1, 12 et 13, **caractérisé en ce que** le Système de Rangement Suspendu est formé par un ensemble groupé de cellules de rangement suspendues (22), disposés comme une matrice au-dessus du transporteur à matrices, et par un dispositif de manipulation avec trois axes (17) qui permet le transfert d'unités de transport (16) entre les cellules du transporteur à matrices et entre ces cellules-là et les cellules de rangement suspendues.

15. Système de distribution et de rangement temporaire d'unités de transport selon la revendication 1, **caractérisé en ce que** le système a un programme associé, fondé sur un ordinateur et/ou un contrôleur logique programmable, responsable par la gestion, la surveillance, la planification et l'équilibre du système, prenant compte des informations sur le travail à être accompli dans le contenu de chaque unité de transport et, notamment, de la trajectoire d'opération, du temps, des quantités et de l'identification de l'article, étant donné que ces informations sont obtenues par une opération associative de l'unité de transport à son contenu.

16. Système de distribution et de rangement temporaire d'unités de transport selon les revendications 2 et 15, **caractérisé en ce qu'**il comprenne un programme de gestion qui exécute une gestion dynamique du système selon un approche avec plusieurs critères, choisissant à chaque moment quels mouvements des unités de transport doivent être réalisés entre les cellules de déplacement, ou entre ces cellules-là et le Système de Rangement Suspendu, et vice-versa, prenant compte des ressources et des nécessités, pour assurer ainsi, par exemple, zéro temps d'attente dans les postes de travail, la satisfaction des délais définis et l'absence de blocages dans le poste de travail.
